# EUROPÄISCHE PATENTSCHRIFT

(11) **EP 2 557 335 B1**
(45) Veröffentlichungstag und Bekanntmachung des Hinweises auf die Patenterteilung: **29.07.2015**
(21) Anmeldenummer: 12179604.9
(22) Anmeldetag: 08.08.2012
(51) Int. Cl.: F16H 59/02, F16H 63/16

(54) **Kraftübertragungsvorrichtung für ein Getriebe**
Power transmission device for a transmission
Dispositif de transmission de force pour un engrenage

(30) Priorität: 08.08.2011 DE 102011052494
(43) Veröffentlichungstag der Anmeldung: 13.02.2013
(73) Patentinhaber: HS Products Engineering GmbH, 82239 Alling (DE)
(72) Erfinder: Heckmayr, Thomas, 86871 Rammingen (DE); Marb, Bernhard Maria, 81377 München (DE); Heckmayr, Otto, 87724 Ottobeuren (DE)
(74) Vertreter: Kuhlmann, Kai

(56) Entgegenhaltungen:
- DE-A1- 2 850 777
- DE-A1- 4 445 124
- DE-A1- 19 918 508
- US-A1- 2009 277 296
- US-A1- 2010 126 295

## Beschreibung

Die vorliegende Erfindung betrifft eine Kraftübertragungsvorrichtung für ein Getriebe mit einem Schaltassistenzsystem.

Kraftübertragungsvorrichtungen für Getriebe, insbesondere mit einem Schaltassistenzsystem, sind bekannt. Sie werden zum Beispiel bei Motorrädern eingesetzt, um zwischen einem Schalthebel und einem Getriebe eingebaut zu werden. Hierfür wird Kraft von dem Schalthebel auf das Getriebe übertragen. Um für ein Schaltassistenzsystem eine Information über die Schaltung beziehungsweise die Schaltrichtung zu geben, ist bei bekannten Kraftübertragungsvorrichtungen ein Sensor vorgesehen, der einen linearbeweglichen Abschnitt der Kraftübertragungsvorrichtung detektiert. Dabei wird dieser lineare Abschnitt zur Detektion gegen ein Federelement bewegt, so dass eine Relativbewegung zwischen zwei linear bewegbaren Teilen der Kraftübertragungsvorrichtung möglich wird. Eine Vorrichtung zur Schaltabsichtserkennung ist zum Beispiel aus der DE 102 36 541 A1 bekannt. Auch die gattungsbildende DE 20 2006 013 435 U1 zeigt grundsätzlich eine Schalteinrichtung für ein Fahrzeuggetriebe.

Nachteilhaft bei bekannten Kraftübertragungsvorrichtungen für ein Getriebe mit einem Schaltassistenzsystem ist es, dass dort eine reine Linearität der einzelnen Bauteile zwingend erforderlich ist. Dies führt dazu, dass die Erstreckungsrichtung entlang dieser linearen Achse für eine solche Kraftübertragungsvorrichtung relativ groß ist. Neben dem dafür notwendigen Bauraum erzeugt dies auch eine komplexere Struktur, die den Einbau in einem kompakten Motorrad nur schwer möglich macht oder sogar unmöglich werden lässt. Darüber hinaus sind bekannte Kraftübertragungsvorrichtungen ausschließlich für die Detektion in einer einzigen Richtung geeignet. Wird also eine Detektion für die Schaltrichtung in beiden Richtungen gewünscht, sind bekannte Kraftübertragungsvorrichtungen hierfür nicht geeignet.

Kraftübertragungsvorrichtungen aus dem Stand der Technik, die einen direkten Kontakt ohne jedes Federelement zwischen einem Schalthebel und einem Getriebe zur Verfügung stellen, sind nicht in der Lage, im Vorlauf vor dem Schaltvorgang einem Schaltassistenzsystem die nachfolgende Schaltung anzuzeigen.

Es ist Aufgabe der vorliegenden Erfindung, die voranstehend beschriebenen Probleme bekannter Kraftübertragungsvorrichtungen zumindest teilweise zu beheben. Insbesondere ist es Aufgabe der vorliegenden Erfindung, eine Kraftübertragungsvorrichtung für ein Getriebe mit einem Schaltassistenzsystem zur Verfügung zu stellen, welches bei einfacher und kompakter Bauweise kostengünstig herzustellen ist und eine Information in zumindest einer Schaltrichtung vor einem Schaltvorgang für ein Schaltassistenzsystem zur Verfügung stellen kann.

Voranstehende Aufgabe wird gelöst durch eine Kraftübertragungsvorrichtung mit den Merkmalen des unabhängigen Anspruchs 1. Weitere Merkmale und Details der Erfindung ergeben sich aus den Unteransprüchen, der Beschreibung und den Zeichnungen.

Ein erfindungsgemäßes Kraftübertragungssystem für ein Getriebe mit einem Schaltassistenzsystem weist einen Schalthebelanschluss für die Aufnahme einer Schaltkraft und einen Getriebeanschluss für die Weitergabe der Schaltkraft an das Getriebe auf. Unter einem Schaltassistenzsystem ist bei der vorliegenden Erfindung zu verstehen, dass eine Information verfügbar wird, ob geschaltet werden soll, noch bevor der Schaltvorgang selbst eingeleitet wird. Dementsprechend muss durch ein Schaltbefehlssignal seitens des Benutzers über einen Schalthebel diese Detektion stattfinden, noch bevor dieses Schaltsignal an das Getriebe weitergegeben worden ist, um die Schaltung selbst vorzunehmen. Bei einer erfindungsgemäßen Kraftübertragungsvorrichtung sind im Gegensatz zu bekannten Kraftübertragungsvorrichtungen der Schalthebelanschluss und der Getriebeanschluss zueinander relativ rotierbar. Im Gegensatz zu bekannten Kraftübertragungsvorrichtungen wird bereits an dieser Stelle eine deutlich kompaktere Bauweise möglich, da die Rotierbarkeit zueinander im Gegensatz zu einer linearen Verschiebung ein freieres Anordnen des Schalthebelanschlusses und des Getriebeanschlusses zueinander ermöglicht. Ein weiterer Vorteil ist es, dass auf diese Weise eine Rotation des Schalthebels nicht erst in eine lineare Bewegung umgesetzt werden muss, und ebenso eine lineare Bewegung nicht in eine rotierende Bewegung für das Getriebe umgesetzt werden muss. Im Rahmen der vorliegenden Erfindung ist unter einer Kraftübertragung auch ein zeitweiliges Umsetzen der Kraft in ein Drehmoment zu verstehen, so dass die Begriffe "Kraft" und "Drehmoment" beziehungsweise "Kraftpfad" und "Drehmomentpfad" im Rahmen der vorliegenden Anmeldung als Synonyme zu verstehen sind.

Bei einer erfindungsgemäßen Kraftübertragungsvorrichtung ist im Kraftpfad zwischen dem Schalthebelanschluss und dem Getriebeanschluss wenigstens eine Federvorrichtung angeordnet. Diese Federvorrichtung weist wenigstens ein Federelement, zumindest eine Rampe und ein Kopplungselement auf. Das Kopplungselement ist bei der Rotation des Schalthebelanschlusses relativ zum Getriebeanschluss entlang der Rampe bewegbar. In Bezug auf diese Bewegbarkeit übt das Federelement auf das Kopplungselement eine Federkraft aus und drückt es gegen die zumindest eine Rampe. Mit anderen Worten weist die Federvorrichtung eine Kombination aus zumindest drei Bauteilen, nämlich dem Federelement, der Rampe und dem Kopplungselement auf. Durch das Federelement wird eine Vorspannung des Kopplungselements gegen die Rampe erzielt. Diese Vorspannung dient dazu, das Kopplungselement in der gewünschten Position zu halten. Findet nun eine Rotation des Schalthebelanschlusses relativ zum Getriebeanschluss statt, so bewegt sich, ausgehend von dieser Rotation, das Kopplungselement entlang der Rampe. Da das Kopplungselement durch das Federelement gegen diese Rampe vorgespannt ist, wird sich das Federelement je nach Ausrichtung der Rampe und Bewegungsrichtung des Kopplungselementes weiter vorspannen oder entspannen. Läuft das Kopplungselement die Rampe hinauf, wird das Federelement dieser Bewegung eine sich erhöhende Federkraft entgegensetzen. Läuft das Kopplungselement die Rampe hinunter, so wird entsprechend die Federkraft geringer. Dies führt dazu, dass zumindest zwei Positionen des Kopplungselementes mit Bezug auf die Rampe unterschieden werden können. Dies sind der unterste Punkt der Rampe und ein oberer Punkt der Rampe, welcher als Schaltposition bezeichnet werden kann. Der unterste Punkt der Rampe kann auch als Neutralposition des Kopplungselementes bezeichnet werden. Zwischen diesen beiden Positionen, also der Neutralposition und der Schaltposition, ist das Kopplungselement bewegbar, wobei sich während diesem Weg die von dem Federelement aufgebrachte Kraft auf das Kopplungselement ändert, insbesondere in Richtung der Schaltposition ansteigt.

Befindet sich bei einer erfindungsgemäßen Kraftübertragungsvorrichtung das Kopplungselement in der Neutralposition, und wird anschließend der Schalthebelanschluss relativ zum Getriebeanschluss rotiert, so bewegt sich das Kopplungselement die Rampe hinauf in Richtung der Schaltposition. Dies geschieht dann, wenn der Nutzer einer erfindungsgemäßen Kraftübertragungsvorrichtung einen Schaltvorgang über einen Schalthebel einleitet. Dies führt er aus, indem er den Schalthebel rotiert und dementsprechend auch eine Rotation des Schalthebelanschlusses relativ zum Getriebeanschluss auslöst. Im Laufe dieser Relativrotation findet jedoch keine Kraftübertragung auf den Getriebeanschluss statt, da diese Bewegung notwendig ist, um eine Bewegung des Kopplungselementes entlang der Rampe in Richtung der Schaltposition durchzuführen. Während dieser Bewegung nimmt die Federkraft des Federelementes zu, bis sie ausreicht, ein Gleichgewicht zwischen der Federkraft des Federelementes und der notwendigen Schaltkraft für den Getriebeanschluss zu erzielen. In diesem Gleichgewicht ist die Schaltposition des Kopplungselementes erreicht, so dass nun die Schaltkraft vom Schalthebelanschluss an den Getriebeanschluss weitergegeben werden kann, und die Relativrotation beendet ist. Ab dieser Situation rotieren Schalthebelanschluss und Getriebeanschluss nicht mehr relativ zueinander, sondern gemeinsam, so dass die Schaltkraft im Wesentlichen ohne Verlust weitergegeben wird.

Nach Beendigung eines Schaltvorgangs wird der Schalthebel wieder in die Neutralposition zurückbewegt, so dass damit automatisch eine Rückstellung von Schalthebelanschluss, Getriebeanschluss und insbesondere dem Kopplungselement der Federvorrichtung stattfindet.

Um einem Schaltassistenzsystem eines Getriebes mit einer erfindungsgemäßen Kraftübertragungsvorrichtung den zu erwartenden Schaltvorgang anzuzeigen, ist erfindungsgemäß ein Sensorelement vorgesehen, welches zumindest zwei unterschiedliche Positionen des Kopplungselementes auf der Rampe detektiert. Diese zumindest zwei unterschiedlichen Positionen sind insbesondere die Neutralposition und die Schaltposition. Dadurch wird es möglich, dass das Sensorelement den Beginn des gewünschten Schaltvorgangs derart detektiert, dass ein Verlassen des Kopplungselementes der Neutralposition erkannt wird. Bereits zu diesem Zeitpunkt liegt die Information vor, dass ein Schalten erwünscht ist. Erreicht das Kopplungselement die zweite Position, nämlich die Schaltposition, so liegt die weitere Information für das Schaltassistenzsystem vor, dass nunmehr der Schaltvorgang selbst im Getriebe durchgeführt wird, indem die Schaltkraft übertragen wird.

Durch eine erfindungsgemäße Kraftübertragungsvorrichtung wird unter anderem eine besonders kompakte Bauform erzeugt. Die Relativrotation zwischen Schalthebelanschluss und Getriebeanschluss ermöglicht eine besonders freie Bauweise der Kraftübertragungsvorrichtung, so dass im Gegensatz zu den linearen Ausbildungsformen bekannter Kraftübertragungsvorrichtungen eine relativ freie Anordnung, zum Beispiel in einem Motorrad, möglich wird. Darüber hinaus hat eine erfindungsgemäße Kraftübertragungsvorrichtung den Vorteil, dass sie besonders einfach einstellbar ist. Durch die Steigung der Rampe und die Vorspannung des Federelementes können in konstruktiv besonders einfacher Weise eine Einstellung der jeweils wirkenden Kräfte, also der Vorspannung in der Neutralposition und der Schaltspannung in der Schaltposition, vorgenommen werden. Insbesondere beträgt die Steigung einer oder mehrerer Rampen dabei zwischen 10 und 15°, insbesondere 12°. Eine Vorspannung für die Neutralposition liegt dabei vorzugsweise im Bereich zwischen 3 und 8 Nm, insbesondere bei einem Vorspanndrehmoment von ca. 6,5 Nm und einem Schaltdrehmoment im Bereich zwischen 10 und 15 Nm. Die Federkraft selbst ist vorzugsweise zwischen 1000 und 1200 Newton eingestellt, so dass eine ausreichend starke Feder vorgesehen ist, um auch große Schaltkräfte auf das Getriebe übertragen zu können. Dies ist auch bei großen Getrieben von Vorteil, da dort ein entsprechend hohes Kraftgleichgewicht zwischen der Federkraft des Federelements und der zu übertragenden Schaltkraft für die Bewegung der einzelnen Getriebeteile im Getriebe notwendig ist.

Das Sensorelement kann bei der vorliegenden Erfindung unterschiedlich ausgestaltet sein. Insbesondere ist es mehrteilig, so dass es einen Detektor und einen Trigger aufweist, welche zum Beispiel die Kombination aus einem Hall-Element und einem Magneten sein können. Auch andere Sensorelemente oder Kombinationen einzelner Sensoren sind denkbar. Als Beispiel seien hier Reed-Sensoren, Kraftsensoren, Induktionssensoren, Hall-Sensoren, Mikroschalter, Potenziometer oder Widerstandssensoren genannt.

Eine erfindungsgemäße Kraftübertragungsvorrichtung kann dahingehend weitergebildet sein, dass die Federkraft senkrecht oder im Wesentlichen senkrecht zur Rotationsachse des Schalthebelanschlusses und des Getriebeanschlusses ausgeübt wird, und das wenigstens eine Federelement insbesondere Tellerfedern aufweist. Da der Schalthebelanschluss und der Getriebeanschluss relativ zueinander rotierbar sind, muss eine gemeinsame Rotationsachse vorhanden sein. Diese gemeinsame Rotationsachse bildet den geometrischen Fixpunkt für diese Ausführungsform. Durch die im Wesentlichen senkrechte Anordnung auf die Rotationsachse wird eine leichtere und konstruktiv einfachere Abstützung der Federkraft und damit der gesamten Federvorrichtung möglich. Insbesondere schneiden sich die Ausrichtung der Federkraft und die Rotationsachse des Schalthebelanschlusses, so dass die Federkraft eine reine Kraft auf die Rotationsachse ohne ein zusätzliches Drehmoment ausübt. Dies vereinfacht die Abstützung noch weiter, da sonst eine Drehmomentabstützung in einem umlaufenden Gehäuse notwendig wäre. Ein weiterer Vorteil dieser Ausführungsform ist es, dass das Kopplungselement auf der Rampe weniger Gefahr läuft, zu verkanten. Die Funktionssicherheit einer derart ausgebildeten Kraftübertragungsvorrichtung ist auf diese Weise erhöht.

Ebenfalls vorteilhaft ist es, wenn bei einer erfindungsgemäßen Kraftübertragungsvorrichtung die Federvorrichtung zumindest zwei Rampen aufweist, deren Steigung eine unterschiedliche Ausrichtung aufweist und die zu beiden Seiten des Kopplungselementes angeordnet sind. Das Vorsehen von zumindest zwei Rampen bringt einen Vorteil mit sich, der erst durch eine erfindungsgemäße Kraftübertragungsvorrichtung möglich wird. Auf diese Weise wird es nämlich möglich, innerhalb einer einzigen Federvorrichtung eine Möglichkeit vorzusehen, die eine Detektion des Schaltwunsches in beiden Richtungen ermöglicht. "Einander gegenüberliegende Rampen" bedeutet also, dass die Neutralposition sich mittig zwischen zwei unterschiedlichen Schaltpositionen befindet. Läuft das Kopplungselement eine erste Rampe zu einer ersten Schaltposition hinauf, kann dies als ein Wunsch für das Hinaufschalten in den nächst höheren Gang interpretiert werden. Bewegt sich dem entgegengesetzt das Kopplungselement aus der Neutralposition die entgegengesetzte Rampe zu einer zweiten Schaltposition hinauf, so wird dies als eine konträre Schaltrichtung verstanden, also zum Beispiel als der Wunsch des Hinunterschaltens in einen geringeren Gang. Durch das Vorsehen einer solchen Ausführungsform kann in besonders kompakter Bauweise, ohne zusätzliche Komplexität die Detektion in beiden Richtungen erfolgen, so dass das Schaltassistenzsystem in beiden Richtungen eine Vorbereitung des Getriebes beziehungsweise weitere vorbereitende Maßnahmen treffen kann.

Solche vorbereitenden Maßnahmen sind zum Beispiel beim Hinaufschalten in den nächst höheren Gang eine Reduktion der Drehzahl beziehungsweise beim Herabschalten in den nächst tieferen Gang eine Erhöhung der Drehzahl. Durch diese Vorbereitung der Drehzahl kann insbesondere auf ein Ein- und Auskuppeln des Getriebes verzichtet werden, so dass durch dieses Vorbereiten aufwändige Kupplungsbauteile sowie ganze Kupplungen entfallen können. Dies wird erst durch eine erfindungsgemäße Kraftübertragungsvorrichtung möglich, da erst eine erfindungsgemäße Kraftübertragungsvorrichtung diese Detektion und damit das Vorbereiten des Getriebes beziehungsweise der Drehzahl in beiden Schaltrichtungen ermöglicht.

Unter zwei Rampen mit einer unterschiedlichen Ausrichtung in Bezug auf die Steigung ist im Rahmen der vorliegenden Erfindung zu verstehen, dass in einer Seitenansicht auf diese Rampe, die jeweils eine schiefe Ebene bildet, die Steigung unterschiedliche Vorzeichen aufweist. Bewegt sich das Kopplungselement konsequent zwischen einer Schaltposition in die andere Schaltposition und durchläuft dabei die Neutralposition, so läuft sie die erste Rampe hinab bis zur Neutralposition, und läuft anschließend die ansteigende zweite Rampe bis zur zweiten Schaltposition wieder hinauf.

Es kann von Vorteil sein, wenn beide Rampen die gleiche oder im Wesentlichen die gleiche Steigung aufweisen. Das bedeutet, dass in beiden Fällen gleiche Kraftverhältnisse vorliegen. Die Veränderung der Federkraft während der Bewegung des Kopplungselementes entlang der jeweiligen Rampe ist also unabhängig oder im Wesentlichen unabhängig von der Schaltrichtung. Damit ist eine gleiche Auslegung des Federelementes sowie der entsprechenden weiteren Kraftgleichgewichte zwischen der Schaltkraft und der Getriebekraft möglich. Darüber hinaus ist es für den Nutzer einer erfindungsgemäßen Kraftübertragungsvorrichtung von Vorteil, dass er in beiden Richtungen mit gleichen Schaltwiderständen arbeitet. In beiden Richtungen muss er als tatsächlichen Schaltpunkt die gleiche Kraft und die gleiche Kraftveränderung auf dem Weg zur Schaltposition hinnehmen. Dies erleichtert ihm den Schaltvorgang und die Gewöhnung an eine erfindungsgemäße Kraftübertragungsvorrichtung. Es kann allerdings auch von Vorteil sein, wenn bei einer erfindungsgemäßen Kraftübertragungsvorrichtung die beiden Rampen unterschiedliche Steigungsgrade aufweisen. Insbesondere bei Einbausituationen einer erfindungsgemäßen Kraftübertragungsvorrichtung, bei welcher unterschiedliche mechanische Verhältnisse für die Erzeugung der Schaltkraft herrschen, kann dies von Vorteil sein. Wird eine erfindungsgemäße Kraftübertragungsvorrichtung zum Beispiel bei einem Motorrad verwendet, so muss für das Schalten in eine erste Richtung ein Schalthebel mit einer Fußspitze nach oben bewegt werden. In einer Schaltrichtung entgegen der ersten Schaltrichtung muss der gleiche Schalthebel nach unten bewegt werden. Da eine Bewegung mit der Fußspitze nach oben deutlich schwieriger ist und dementsprechend weniger Kraft aufgewendet werden kann als bei einer Bewegung mit der Fußspitze nach unten, kann ein solcher mechanischer Unterschied durch die Ausbildung unterschiedlich steiler Rampen nachgebildet werden. Dies führt dazu, dass für das Hochschalten, also die Bewegung mit geringerer Kraftmöglichkeit des Schalthebels, eine Rampe mit geringerer Steigung vorgesehen ist, während für die Bewegung des Schalthebels mit größerer zur Verfügung stehender Schaltkraft eine entsprechend steilere Rampe zur Verfügung gestellt wird. Daraus folgt, dass trotz ungleicher Möglichkeiten für den Benutzer einer erfindungsgemäßen Kraftübertragungsvorrichtung eine Einsatzmöglichkeit der Kraftübertragungsvorrichtung gemäß der vorliegenden Erfindung für beide Richtungen besteht. Dies erhöht insbesondere den Komfort für die Schaltung mit Hilfe einer erfindungsgemäßen Kraftübertragungsvorrichtung.

Es kann vorteilhaft sein, wenn bei einer erfindungsgemäßen Kraftübertragungsvorrichtung zumindest ein mechanischer Anschlag vorgesehen ist, der die relative Rotationsfreiheit des Schalthebelanschlusses zum Getriebeanschluss in wenigstens eine Rotationsrichtung, insbesondere in beide Rotationsrichtungen, begrenzt. Ein solcher Anschlag kann zum Beispiel im Bereich der Federvorrichtung selbst vorgesehen sein, und als Anschlag zum Kopplungselement ausgebildet sein. Jedoch ist es auch anderweitig ausbildbar, insbesondere zwischen dem Getriebeanschluss und dem Schalthebelanschluss, so dass zum Beispiel ein Anschlag zwischen einzelnen Teilen dieser beiden Bauelemente besteht. Auch ein Anschlag relativ zu einem Gehäuse ist im Rahmen der vorliegenden Erfindung denkbar. Das Vorsehen eines Anschlags führt dazu, dass ein Überdrehen verhindert wird. Ein solches Überdrehen würde die Gefahr mit sich bringen, dass das Kopplungselement die definierten Positionen, insbesondere die definierten Endpositionen in Form der Schaltposition und/oder der Neutralposition, verlässt. Dies würde weiter dazu führen, dass möglicherweise die Funktionalität für einen nachfolgenden Schaltvorgang beeinträchtigt ist. Dabei ist darauf hinzuweisen, dass die Anschläge selbst vorzugsweise nur Sicherungsanschläge sind. Insbesondere dienen sie nur dazu, bei einer Fehlfunktion des Federelementes abzusichern, dass kein Verlassen der jeweils notwendigen Position durch das Kopplungselement erfolgt. Im Normalbetrieb reicht es aus, wenn das Kopplungselement über das Federelement eine ausreichende Federkraft aufbringt, um im Gleichgewicht mit der notwendigen Schaltkraft für das Getriebe zu stehen. Dies wird in der Regel eintreten, noch bevor der Anschlag erreicht ist, so dass ausschließlich über das Kraftgleichgewicht geschaltet wird. Die Anschläge dienen also rein zur Sicherheit. Dies führt dazu, dass selbst bei dem Bruch des Federelementes die Funktionsfähigkeit der erfindungsgemäßen Kraftübertragungsvorrichtung nicht beeinträchtigt ist. Darüber hinaus kann auf diese Weise ein Wartungsintervall für die Kraftübertragungsvorrichtung reduziert werden, beziehungsweise bei der geeigneten Auswahl des Federelementes sogar eine Wartungsfreiheit gegeben sein.

Ebenfalls vorteilhaft ist es, wenn bei einer erfindungsgemäßen Kraftübertragungsvorrichtung die Federvorrichtung Einstellmittel aufweist, mit deren Hilfe die Federkraft, die vom Federelement auf das Kopplungselement aufgebracht wird, insbesondere von außen, einstellbar ist. Die Einstellbarkeit der Federvorrichtung kann zum Beispiel die Einstellbarkeit des Federelementes mit sich bringen. Zum Beispiel können eine Vorspannung durch ein Vorspannelement und entsprechende Gewindemittel vorgesehen sein. Wird zum Beispiel eine Schraube mit einer Gewindescheibe verbunden, kann diese Schraube von außen, also zum Beispiel außerhalb eines Gehäuses der Kraftübertragungsvorrichtungen, rotiert werden. Durch diese Rotation und eine rotationsfeste Verbindung der Gewindescheibe zum Federelement kann hier eine Relativbewegung erzeugt werden, die die Vorspannung des Federelementes erhöht oder verringert. Damit kann ohne ein Öffnen eines Gehäuses von außen die Kraftübertragungsvorrichtung hinsichtlich der Verspannkraft und der Schaltkraft eingestellt und auch verändert werden. Insbesondere kann auf diese Weise auch eine Adaptierung an den jeweiligen Komfortwunsch des Benutzers einer solchen Kraftübertragungsvorrichtung ermöglicht werden, ohne dass ein komplexes Öffnen der Kraftübertragungsvorrichtung notwendig wird. Auch eine Reduktion der Elastizität oder des Federmoduls des Federelementes über die Einsatzdauer kann auf diese Weise ausgeglichen werden, da nach einer Vielzahl von Schaltvorgängen ein einfaches Nachstellen des Federelementes ermöglicht ist.

Ein weiterer Vorteil ist es, wenn bei einer erfindungsgemäßen Kraftübertragungsvorrichtung das Sensorelement zumindest einen Hall-Sensor und das Kopplungselement wenigstens einen Magneten aufweist. Selbstverständlich kann die Anordnung des Sensorelementes auch umgekehrt ausgebildet sein, so dass der Hall-Sensor am Kopplungselement und der Magnet relativ dazu, zum Beispiel in einem Gehäuse, angeordnet sind. Auf diese Weise wird besonders einfach und kostengünstig das gewünschte Signal erzeugt. Der Hall-Sensor ist dabei insbesondere flach ausgeführt und im Gehäuse angeordnet, so dass eine besonders kompakte Bauweise möglich wird. Darüber hinaus kann ein Gehäusedeckel vorgesehen sein, in welchem der Hall-Sensor angeordnet ist. Dies ermöglicht eine besonders leichte Zugänglichkeit zum Hall-Sensor und darüber hinaus eine besonders einfache Kabelführung, um das vom Hall-Sensor erzeugte Signal an das Schaltassistenzsystem weiterzugeben.

Ein weiterer Vorteil ist es, wenn bei einer erfindungsgemäßen Kraftübertragungsvorrichtung wenigstens zwei Federvorrichtungen vorgesehen sind, die jeweils unterschiedliche Federkräfte auf das jeweilige Kopplungselement ausüben. Alternativ zu unterschiedlichen Rampen in einer einzigen Federvorrichtung kann auf diese Weise durch unterschiedliche Federvorrichtungen eine noch freiere Wahl der jeweiligen Federkraftvariation stattfinden. Auf diese Weise können unterschiedliche Rampensteigungen und darüber hinaus unterschiedliche Federvorspannungen für unterschiedliche Schaltrichtungen vorgesehen werden. Dies erhöht zwar die Komplexität der gesamten Vorrichtung, ermöglicht darüber hinaus aber eine deutlich größere Flexibilität der Einstellung der jeweiligen Kraftverläufe zwischen der Neutralposition und der entsprechenden Schaltposition. Die Richtungen der Rampen der jeweiligen Federvorrichtung sind dabei so zueinander ausgerichtet, dass sie zueinander konträr liegen, insbesondere entgegengesetzte Steigungen aufweisen. Hier kann ein Vergleich zu einer einzelnen Federvorrichtung mit zwei entgegengesetzt liegenden Rampen gezogen werden, wobei die Rampen, die Federelemente und die Kopplungselemente bei dieser Ausführungsform auf zwei separate Federvorrichtungen aufgeteilt sind.

Ebenfalls vorteilhaft ist es, wenn bei einer erfindungsgemäßen Kraftübertragungsvorrichtung die zumindest eine Rampe der wenigstens einen Federvorrichtung einen gekrümmten oder teilweise gekrümmten Verlauf aufweist. Insbesondere wird auf diese Weise das Verlassen der Neutralposition beziehungsweise das Erreichen der Schaltposition erleichtert. Damit kann die variierende Federkraft zwischen der Neutralposition und der Schaltposition noch freier variiert und somit ein Kraftverlauf erzielt werden, welcher dem höchsten Komfortanspruch eines Nutzers einer erfindungsgemäßen Kraftübertragungsvorrichtung am nächsten kommt. Insbesondere sind auf diese Weise sehr komplexe Kraftverläufe einstellbar. Zum Beispiel kann ein besonders leichtes oder ein besonders schweres Verlassen der Neutralposition eingestellt werden, während der weitere Verlauf des Kraftverlaufes bis zur Schaltposition frei einstellbar bleibt.

Auch vorteilhaft kann es sein, wenn bei einer erfindungsgemäßen Kraftübertragungsvorrichtung ein Gehäuse derart angeordnet ist, dass eine Abdichtung zumindest des Sensorelementes erfolgt. Diese Abdichtung kann zum Beispiel durch entsprechende O-Ringe oder Gussmaterial hergestellt sein. Auch ist es möglich, dass einzelne Teile, die zueinander relativ unbewegbar sind, miteinander fest verschraubt und auf diese Weise abgedichtet sind. Bei solchen Teilen ist es auch möglich, dass eine Presspassung die gewünschte Dichtigkeit erzeugt.

Ein weiterer Vorteil ist es, wenn bei einer erfindungsgemäßen Kraftübertragungsvorrichtung der Getriebeanschluss für die Übertragung der Schaltkraft in Form eines Drehmoments ausgebildet ist. Mit anderen Worten erfolgt eine drehmomentschlüssige Verbindung zwischen dem Getriebeanschluss und dem Getriebe selbst, die zum Beispiel durch eine Verzahnung im Inneren des Getriebeanschlusses ausgebildet ist. Damit wird eine noch kompaktere Bauweise möglich, da eine erfindungsgemäße Kraftübertragungsvorrichtung sozusagen direkt an ein Getriebe angebracht werden kann. Es ist darauf hinzuweisen, dass die Kraftübertragungsvorrichtung im Wesentlichen frei zwischen dem Schalthebel und dem Getriebe angeordnet ist. Insbesondere ist keine Verbindung zu weiteren Bauteilen notwendig, da eine Relativbewegung der gesamten Kraftübertragungsvorrichtung, insbesondere eine Relativrotation der gesamten Kraftübertragungsvorrichtung relativ zum Getriebe selbst, stattfinden muss. Da bei dieser Ausführungsform der Getriebeanschluss direkt ein Drehmoment an das Getriebe übergibt, muss keine Umwandlung mehr von einer Linearkraft in ein Drehmoment erfolgen. Nur auf diese Weise wird es möglich, dass eine erfindungsgemäße Kraftübertragungsvorrichtung bereits in kompakter Bauform direkt an das Getriebe angelenkt wird.

Es kann weiter von Vorteil sein, wenn im Rahmen der vorliegenden Erfindung das Kopplungselement einer Kraftübertragungsvorrichtung eine Linienberührung mit der Rampe aufweist. Eine solche Linienberührung erzeugt eine Möglichkeit der Kraftübertragung zwischen dem Kopplungselement und der Rampe, die besonders vorteilhaft ist. Zum einen wird die Reibungskraft zwischen Kopplungselement und Rampe reduziert, während gleichzeitig eine Linie zur Verfügung steht, um die notwendigen Kräfte zu übertragen. Insbesondere verläuft über diese Linienberührung, die bei realer Ausbildung häufig auch eine kleine Fläche aufweisen wird, ein Kraftgleichgewicht zwischen der durch das Federelement erzeugten Federkraft und der für die Schaltung im Getriebe notwendigen Schaltkraft, wenn sich das Kopplungselement in der Schaltposition befindet.

Auch vorteilhaft ist es, wenn bei einer erfindungsgemäßen Kraftübertragungsvorrichtung das Kopplungselement drehbar gelagert ist, um auf der Rampe abzurollen. Dies ermöglicht eine noch weiter verbesserte Funktionalität der erfindungsgemäßen Kraftübertragungsvorrichtung, da eine Reibungskraft zwischen Rampe und Kopplungselement deutlich reduziert wird. Der Übergang von einer Haft- und Gleitreibung zu einer Rollreibung bringt den weiteren Vorteil mit sich, dass der Verschleiß zwischen Rampe und Kopplungselement deutlich reduziert wird.

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen schematisch:
- Figur 1: eine erste Ausführungsform einer erfindungsgemäßen Kraftübertragungsvorrichtung in einem Teilschnitt,
- Figur 2: die Kraftübertragungsvorrichtung aus Figur 1 in einer Perspektive,
- Figur 3: die Kraftübertragungsvorrichtung der Figuren 1 und 2 in einem Teilschnitt,
- Figur 4a: in einem Teilschnitt eine Ausführungsform einer erfindungsgemäßen Federvorrichtung,
- Figur 4b: die Federvorrichtung der Figur 4a in einem anderen Teilschnitt,
- Figur 5: eine Ausführungsform einer erfindungsgemäßen Kraftübertragungsvorrichtung in Explosionsdarstellung,
- Figur 6a: eine Ausführungsform des Getriebeanschlusses und
- Figur 6b: den Getriebeanschluss von Figur 6a in einer anderen Perspektive.

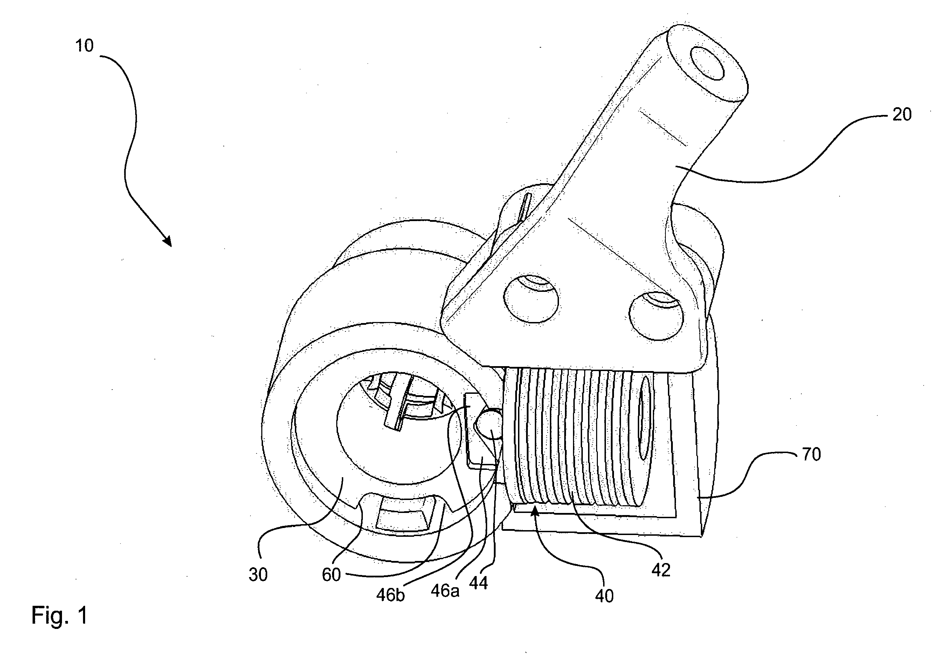

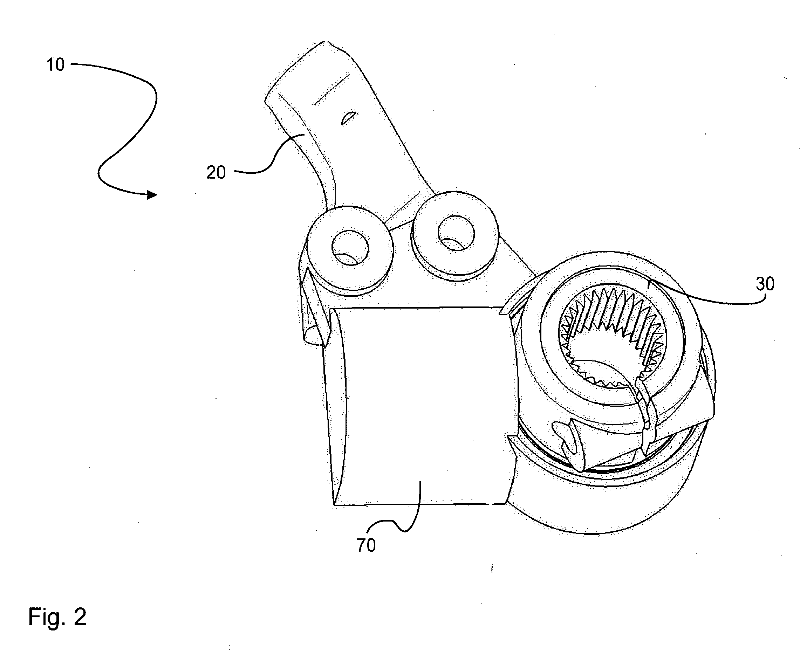

In Figur 1 ist schematisch im perspektivischen Teilschnitt eine erste Ausführungsform einer erfindungsgemäßen Kraftübertragungsvorrichtung 10 dargestellt. Gut zu erkennen sind ein Schalthebelanschluss 20 und ein Getriebeanschluss 30. Dabei ist der Getriebeanschluss 30 auf der gegenüberliegenden Seite angeordnet und ist zum Beispiel in Figur 2 gut sichtbar. Der Schalthebelanschluss 20 ist über diverse Bohrungen mit einem Schalthebel verbindbar, so dass von diesem Schalthebel Kraft in den Schalthebelanschluss 20 eingeleitet werden kann. Der Getriebeanschluss 30 weist eine Verzahnung auf, so dass direkt ein Drehmoment an ein nicht mehr dargestelltes Getriebe übertragen werden kann. Für den Schaltvorgang selbst wird die Kraft vom Schalthebelanschluss 20 auf den Getriebeanschluss 30 übertragen, so dass die entsprechende Schaltkraft in das Getriebe insbesondere als Drehmoment eingeleitet werden kann. Um zu diesem Übertragen der Schaltkraft zu gelangen, muss im Inneren der Kraftübertragungsvorrichtung 10 eine Federkraft überwunden werden, die eine Relativbewegung zwischen dem Schalthebelanschluss 20 und dem Getriebeanschluss 30 in rotierender Weise erzeugt.

Für die Federvorrichtung 40 sind, zum Beispiel in Figur 1 erkennbar, ein Federelement 42, ein Kopplungselement 44 sowie zwei Rampen 46a und 46b vorgesehen. Dabei sei darauf hingewiesen, dass die Funktionalität einer erfindungsgemäßen Kraftübertragungsvorrichtung 10 auch das Vorsehen einer einzigen Rampe, zum Beispiel der Rampe 46a unter Weglassen der Rampe 46b, möglich wäre. Nachfolgend soll kurz die Funktionsweise einer erfindungsgemäßen Kraftübertragungsvorrichtung 10 erläutert werden. Hierzu wird insbesondere Bezug genommen auf die Figur 1, die Figur 3 und die Figuren 4a und 4b.

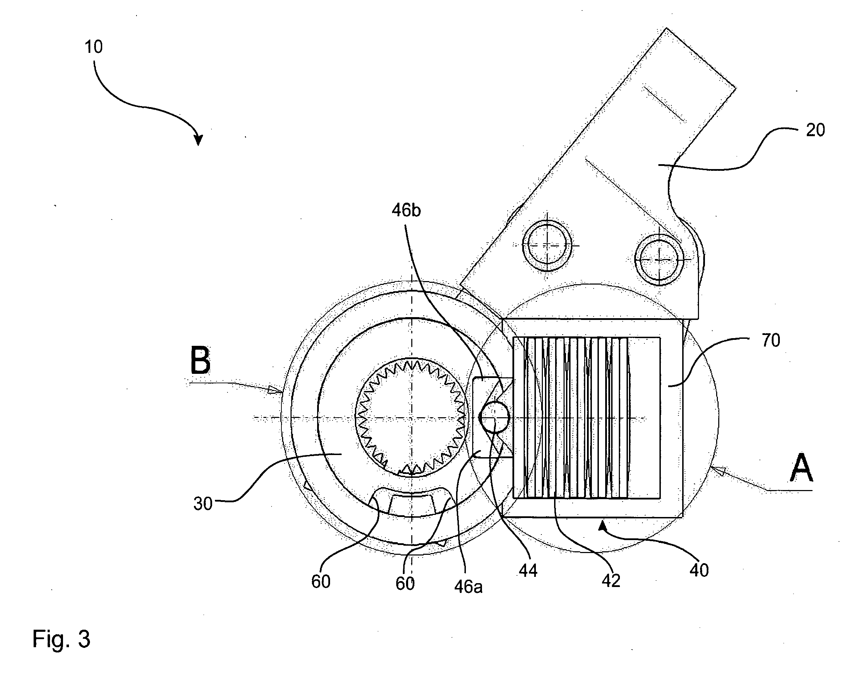

In Figur 3 ist gut zu erkennen, wie die Relativbewegung stattfinden kann. Wird durch den Benutzer einer erfindungsgemäßen Kraftübertragungsvorrichtung 10 Kraft an den Schalthebelanschluss 20 übergeben, so möchte dieser um eine Rotationsachse rotieren, die gleichzeitig auch die Rotationsachse für den Getriebeanschluss 30 ist. In Figur 3 ist durch zwei Strichpunktlinien im Kreuzungspunkt diese Achse definiert, die aus der Zeichnungsebene der Figur 3 senkrecht herausragt. Zu Beginn der Einleitung der Schaltkraft durch den Schalthebelanschluss 20 wird eine Relativrotation des Schalthebels 20 um den Getriebeanschluss 30 möglich. Diese Relativrotation ist möglich, da das Kopplungselement 44 und das Federelement 42 kraftschlüssig mit dem Schalthebelanschluss 20 und die Rampen 46a und 46b kraftschlüssig mit dem Getriebeanschluss 30 verbunden sind. Mit anderen Worten erfolgt insbesondere eine Relativbewegung zwischen dem Kopplungselement 44 und den Rampen 46a und 46b.

Das Kopplungselement 44 ist durch ein Federelement 42 der Federvorrichtung 40 vorgespannt. Bei dieser Ausführungsform handelt es sich bei dem Federelement 42 um Tellerfedern, die eine Vorspannung von insbesondere ca. 1000 N auf das Kopplungselement 44 aufbringen. In den Figuren 1, 3, 4a und 4b befindet sich das Kopplungselement 44 in der Neutralposition. Aus dieser Neutralposition kann das Kopplungselement 44 entweder die erste Rampe 46a oder die zweite Rampe 46b hinauflaufen. Im Verlauf dieser Bewegung wird das Kopplungselement 44 die Schaltposition erreichen. Diese ist dann erreicht, wenn durch das Hinauflaufen des Kopplungselementes 44 das Federelement 42 so weit zusammengedrückt ist, dass die dadurch vergrößerte Federkraft der notwendigen Schaltkraft im Getriebe über dem Getriebeanschluss 30 entspricht. Mit anderen Worten besteht zu dem Zeitpunkt der Schaltposition ein Kraftgleichgewicht zwischen der auf das Kopplungselement 44 in dieser Schaltposition aufgebrachten Federkraft durch das Federelement 42 und der notwendigen Schaltkraft im Getriebe über den Getriebeanschluss 30 andererseits.

Nach dieser Relativbewegung zwischen dem Schalthebelanschluss 20 und dem Getriebeanschluss 30, also nach dem Erreichen des Kraftgleichgewichtes zwischen der Schaltkraft und der Federkraft durch das Federelement 42 endet die Relativbewegung zwischen Schalthebelanschluss 20 und Getriebeanschluss 30 und damit die Vorbereitung des Schaltvorganges, so dass ein Weiterbewegen des Schalthebels und damit auch des Schalthebelanschlusses 20 ein Rotieren des Getriebeanschlusses 30 gemeinsam mit dem Schalthebelanschluss 20 mit sich bringt. Damit wird ab dieser Situation, also ab Erreichen der Schaltposition durch das Kopplungselement 44, die Schaltkraft hier in Form eines Drehmomentes direkt an das Getriebe weitergegeben.

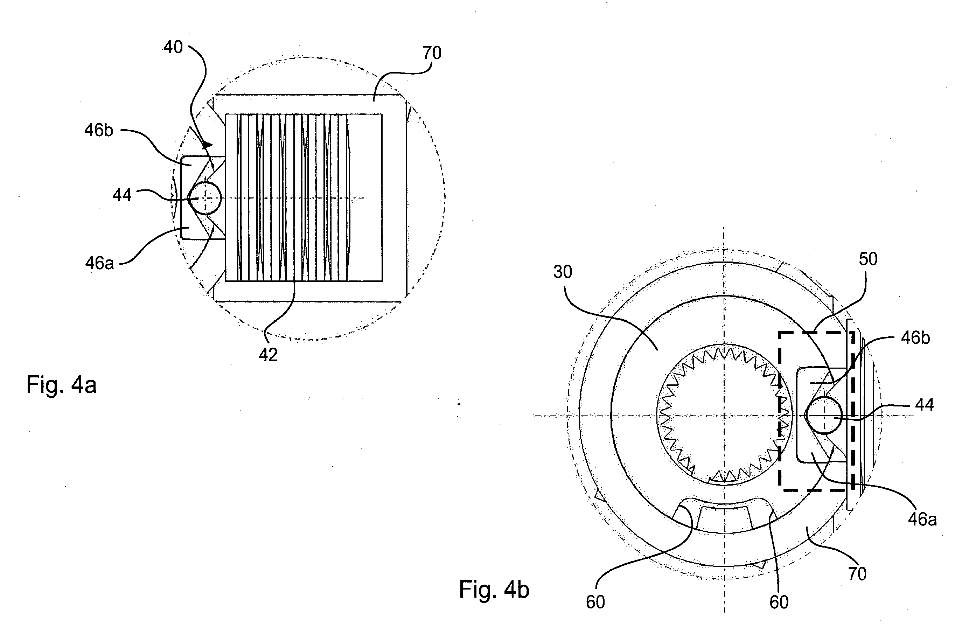

Während der Bewegung des Kopplungselementes 44 zwischen der Neutralposition und der jeweiligen Schaltposition, wie sie voranstehend ausführlich erläutert worden ist, findet eine Detektion des Ortes des Kopplungselementes 44 statt. Hierfür ist ein Sensorelement 50 vorgesehen, wie es zum Beispiel in Figur 4b zu erkennen ist. Insbesondere weist dieses Sensorelement 50 zumindest einen Hall-Sensor auf, der mit einem Permanentmagneten im Kopplungselement 44 korrespondiert. Dieses Hall-Element des Sensorelementes 50 ist in der Lage die unterschiedlichen Positionen in Form von unterschiedlichen Spannungssignalen an einen Schaltassistenten für das Getriebe weiterzugeben. Durch eine derartige Vorbereitung wird insbesondere eine Detektion in zwei Richtungen möglich. Wird, beispielsweise gut zu erkennen in Figur 1 und Figur 3, der Schalthebelanschluss 20 relativ zum Getriebeanschluss 30 im Uhrzeigersinn rotiert, läuft das Kopplungselement 44 die Rampe 46a nach oben. Dies könnte zum Beispiel der Wunsch für das Herunterschalten in den nächst tieferen Gang sein. Das Hall-Element detektiert das Verlassen der Neutralposition und das Erreichen der Schaltposition auf der ersten Rampe 46a.

Bewegt sich nach dem Schaltvorgang der Schalthebelanschluss 20 und damit auch das Kopplungselement 40 wieder zurück in die Neutralposition, so wird dies vom Hall-Element des Sensorelementes 50 detektiert. Anschließend kann der Nutzer durch eine Bewegung des Schalthebelanschlusses 20 entgegen dem Uhrzeigersinn relativ zum Getriebeanschluss 30 eine Relativbewegung des Kopplungselementes 40 entlang der zweiten Rampe 46b erzeugen. Hier detektiert der Hall-Sensor des Sensorelementes 50 wiederum das Verlassen der Neutralposition und das Erreichen der zweiten Schaltposition. Da der Hall-Sensor des Sensorelementes 50 durch die konstruktive Ausbildung dieser Ausführungsform mit zwei Rampen 46a und 46b zwei unterschiedliche Schaltpositionen sowie die Neutralposition unterscheiden kann, ist es auch möglich unterschiedliche Signale hinsichtlich dieser beiden unterschiedlichen Schaltpositionen zu erzeugen. Trotz der besonders kompakten Bauweise dieser Kraftübertragungsvorrichtung 10 ist es also möglich, in beiden Richtungen eine Detektion des Schaltvorgangs vorzunehmen, noch bevor die Schaltkraft nach dem Erreichen der jeweiligen Schaltposition über den Getriebeanschluss 30 auf das Getriebe übertragen wird. Erst ab diesem Zeitpunkt beginnt der Schaltvorgang im Getriebe selbst, so dass zu diesem Zeitpunkt der Schaltassistent weitere Komponenten des Fahrzeugs, insbesondere die Drehzahl des Motors, bereits auf den folgenden Schaltvorgang vorbereiten konnte.

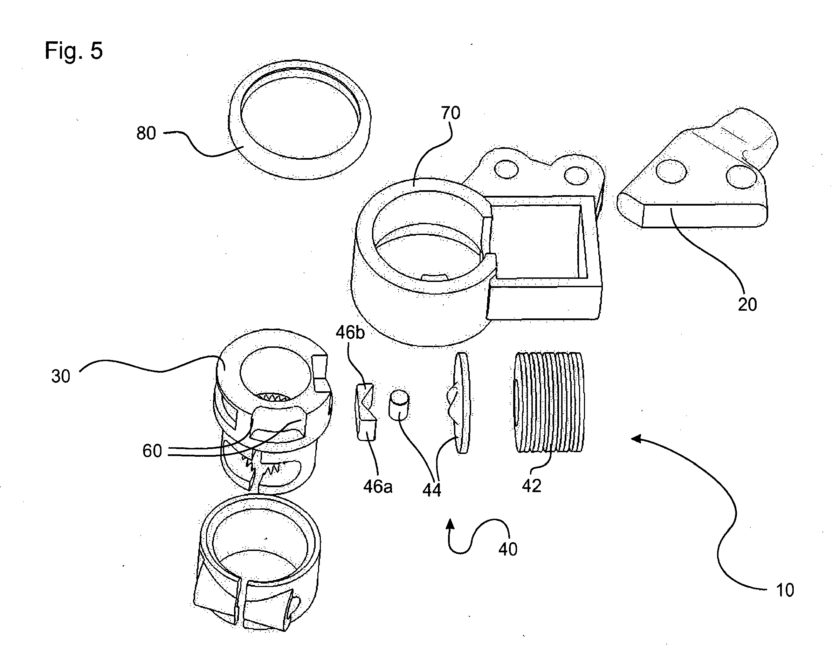

In Figur 5 ist eine Explosionsdarstellung mit den wesentlichen Bauteilen einer erfindungsgemäßen Kraftübertragungsvorrichtung 10 dargestellt. Insbesondere ist hier auf die Dichtung 80 hinzuweisen, die ein Gehäuse 70 dahingehend abdichtet, dass das Sensorelement 50 vor dem Eindringen von Flüssigkeit gesichert ist.

Darüber hinaus findet sich bei der Ausführungsform der Kraftübertragungsvorrichtung 10 ein mechanischer Anschlag 60. Dieser ist besonders gut in den Figuren 1, 3 und 4b zu erkennen. Hier ist gut zu erkennen, dass der Anschlag 60 für eine Relativbewegung beziehungsweise eine Begrenzung der Relativbewegung zwischen dem Getriebeanschluss 30 und dem Schalthebelanschluss 20 ausgelegt ist. Bewegt sich, zum Beispiel in Figur 4b zu erkennen, das Kopplungselement 44 die zweite Rampe 46b zur zweiten Schaltposition hinauf, so bewegt sich auch ein Fortsatz des Schalthebelanschlusses 20 beziehungsweise des Gehäuses 70 relativ zum Getriebeanschluss 30. Dabei sind die mechanischen Anschläge geometrisch derart angeordnet, dass sie noch nicht erreicht werden, wenn das Kopplungselement 44 die Schaltposition erreicht hat. Würde jedoch das Federelement 42 der Federvorrichtung 40 einen Defekt aufweisen, und dementsprechend die Schaltposition des Kopplungselementes 44 noch nicht das ausreichende Kraftgleichgewicht für den Schaltvorgang über den Getriebeanschluss 30 zur Verfügung stellen, so würde eine Weiterbewegung des Kopplungselementes 44 die Folge sein. Diese weitere Relativbewegung des Kopplungselementes 44 und damit auch eine weitere Relativrotation des Schalthebelanschlusses 20 relativ zum Getriebeanschluss 30 wird durch die beiden Anschläge 60 begrenzt. Diese dienen also als Sicherungsanschläge und finden im normalen Betrieb der Kraftübertragungsvorrichtung 10 keine Anwendung.

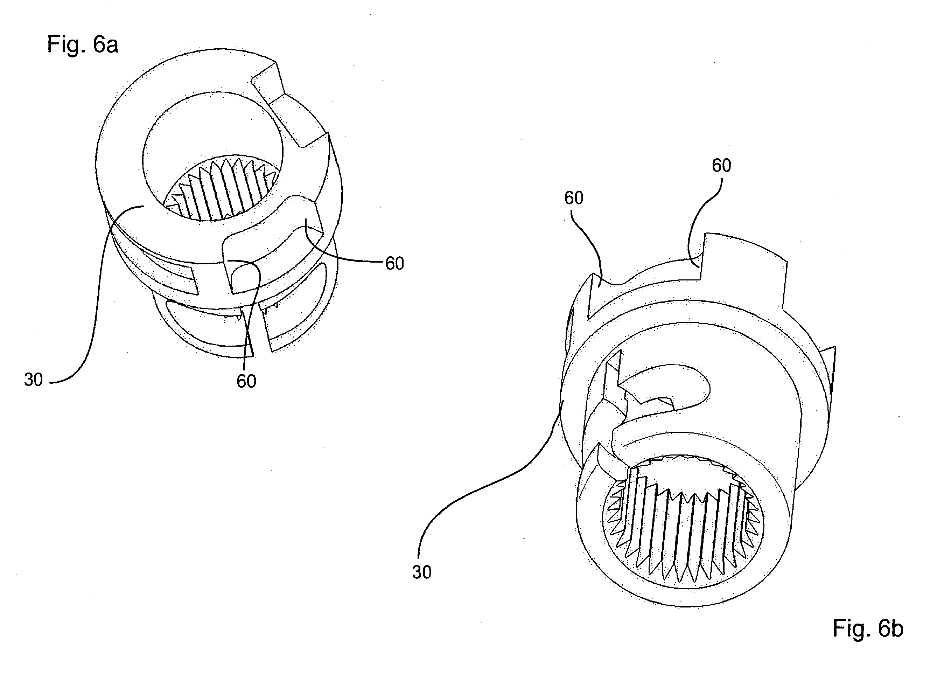

In den Figuren 6a und 6b wird nochmals ein Getriebeanschluss 30 einer Ausführungsform dargestellt. Hier sind gut die kompakten Abmessungen des Getriebeanschlusses 30 sowie die mechanischen Anschläge 60 zu erkennen. Auch handelt es sich bei dieser Ausführungsform um eine Variante, bei welcher der Getriebeanschluss 30 über die entsprechenden zackenförmigen Ausbildungen direkt ein Drehmoment an das Getriebe weitergeben kann.

### Bezugszeichenliste

- 10: Kraftübertragungsvorrichtung
- 20: Schalthebelanschluss
- 30: Getriebeanschluss
- 40: Federvorrichtung
- 42: Federelement
- 44: Kopplungselement
- 46a: Rampe
- 46b: Rampe
- 50: Sensorelement
- 60: mechanischer Anschlag
- 70: Gehäuse
- 80: Dichtung

## Patentansprüche

1. Kraftübertragungsvorrichtung (10) für ein Getriebe (100) mit einem Schaltassistenzsystem, aufweisend einen Schalthebelanschluss (20) für die Aufnahme einer Schaltkraft und einen Getriebeanschluss (30) für die Weitergabe der Schaltkraft an das Getriebe (100), die relativ zueinander rotierbar sind, **dadurch gekennzeichnet, dass**
im Kraftpfad zwischen dem Schalthebelanschluss (20) und dem Getriebeanschluss (30) wenigstens eine Federvorrichtung (40) mit wenigstens einem Federelement (42), zumindest einer Rampe (46a, 46b) und einem Kopplungselement (44), das bei der Rotation des Schalthebelanschlusses (20) relativ zum Getriebeanschluss (30) entlang der Rampe (46a, 46b) bewegbar ist, angeordnet ist, wobei das Federelement (42) auf das Kopplungselement (44) eine Federkraft ausübt und es gegen die zumindest eine Rampe (46a, 46b) drückt,
und wobei ein Sensorelement (50) vorgesehen ist, welches zumindest zwei unterschiedliche Positionen des Kopplungselementes (44) auf der Rampe (46a, 46b) detektiert.

2. Kraftübertragungsvorrichtung (10) nach Anspruch 1, **dadurch gekennzeichnet, dass** die Federkraft senkrecht oder im Wesentlichen senkrecht zur Rotationsachse des Schalthebelanschlusses (20) und des Getriebeanschlusses (30) ausgeübt wird und das wenigstens eine Federelement (42) insbesondere Tellerfedern aufweist.

3. Kraftübertragungsvorrichtung (10) nach einem der vorangegangenen Ansprüche, **dadurch gekennzeichnet, dass** die Federvorrichtung (40) zumindest zwei Rampen (46a, 46b) aufweist, deren Steigung eine unterschiedliche Ausrichtung aufweist und die zu beiden Seiten des Kopplungselements (44) angeordnet sind.

4. Kraftübertragungsvorrichtung (10) nach Anspruch 3, **dadurch gekennzeichnet, dass** die beiden Rampen (46a, 46b) die gleiche oder im Wesentlichen die gleiche Steigung aufweisen.

5. Kraftübertragungsvorrichtung (10) nach Anspruch 3, **dadurch gekennzeichnet, dass** die beiden Rampen (46a, 46b) unterschiedliche Steigungen aufweisen.

6. Kraftübertragungsvorrichtung (10) nach einem der vorangegangenen Ansprüche, **dadurch gekennzeichnet, dass** zumindest ein mechanischer Anschlag (60) vorgesehen ist, der die relative Rotationsfreiheit des Schalthebelanschlusses (20) zum Getriebeanschluss (30) in wenigstens eine Rotationsrichtung, insbesondere in beide Rotationsrichtungen begrenzt.

7. Kraftübertragungsvorrichtung (10) nach einem der vorangegangenen Ansprüche, **dadurch gekennzeichnet, dass** die Federvorrichtung (40) Einstellmittel aufweist, mit deren Hilfe die Federkraft, die von dem Federelement (42) auf das Kopplungselement (44) aufgebracht wird, insbesondere von außen einstellbar ist.

8. Kraftübertragungsvorrichtung (10) nach einem der vorangegangenen Ansprüche, **dadurch gekennzeichnet, dass** das Sensorelement (50) zumindest einen Hall-Sensor und das Kopplungselement (44) wenigstens einen Magneten aufweist.

9. Kraftübertragungsvorrichtung (10) nach einem der vorangegangenen Ansprüche, **dadurch gekennzeichnet, dass** wenigstens zwei Federvorrichtungen (40) vorgesehen sind, die jeweils unterschiedliche Federkräfte auf das jeweilige Kopplungselement (44) ausüben.

10. Kraftübertragungsvorrichtung (10) nach einem der vorangegangenen Ansprüche, **dadurch gekennzeichnet, dass** die zumindest eine Rampe (46a, 46b) der wenigstens einen Federvorrichtung (40) einen gekrümmten oder teilweise gekrümmten Verlauf aufweist.

11. Kraftübertragungsvorrichtung (10) nach einem der vorangegangenen Ansprüche, **dadurch gekennzeichnet, dass** ein Gehäuse (70) derart angeordnet ist, dass eine Abdichtung zumindest des Sensorelements (50) erfolgt.

12. Kraftübertragungsvorrichtung (10) nach einem der vorangegangenen Ansprüche, **dadurch gekennzeichnet, dass** der Getriebeanschluss (30) für die Übertragung der Schaltkraft in Form eines Drehmoments ausgebildet ist.

13. Kraftübertragungsvorrichtung (10) nach einem der vorangegangenen Ansprüche, **dadurch gekennzeichnet, dass** das Kopplungselement (44) eine Linienberührung mit der Rampe (46a, 46b) aufweist

14. Kraftübertragungsvorrichtung (10) nach einem der vorangegangenen Ansprüche, **dadurch gekennzeichnet, dass** das Kopplungselement (44) drehbar gelagert ist, um auf der Rampe (46a, 46b) abzurollen.

## Claims

1. A power transmission device (10) for a transmission (100) with a shift assistance system, having a shift lever connection (20) for receiving a shifting force and a transmission connection (30) for passing on the shifting force to the transmission (100), which are rotatable relative to one another, **characterized in that** in the force path between the shift lever connection (20) and the transmission connection (30) at least one spring device (40) with at least one spring element (42) is arranged, at least one ramp (46a, 46b) and a coupling element (44), which is movable on rotation of the shift lever connection (20) relative to the transmission connection (30) along the ramp (46a, 46b), wherein the spring element (42) exerts an elastic force on the coupling element (44) and presses it against the at least one ramp (46a, 46b), and wherein a sensor element (50) is provided, which detects at least two different positions of the coupling element (44) on the ramp (46a, 46b).

2. The power transmission device (10) according to claim 1, **characterized in that** the elastic force is exerted perpendicularly or substantially perpendicularly to the rotation axis of the shift lever connection (20) and of the transmission connection (30), and the at least one spring element (42) has, in particular, plate springs.

3. The power transmission device (10) according to one of the preceding claims, **characterized in that** the spring device (40) has at least two ramps (46a, 46b), the inclination of which has a different orientation and which are arranged on both sides of the coupling element (44).

4. The power transmission device (10) according to claim 3, **characterized in that** the two ramps (46a, 46b) have the same or substantially the same inclination.

5. The power transmission device (10) according to claim 3, **characterized in that** the two ramps (46a, 46b) have different inclinations.

6. The power transmission device (10) according to one of the preceding claims, **characterized in that** at least one mechanical stop (60) is provided, which delimits the relative freedom of rotation of the shift lever connection (20) to the transmission connection (30) in at least one rotation direction, in particular in both rotation directions.

7. The power transmission device (10) according to one of the preceding claims, **characterized in that** the spring device (40) has adjustment means, by means of which the elastic force, which is applied by the spring element (42) onto the coupling element (44), is able to be adjusted in particular from the exterior.

8. The power transmission device (10) according to one of the preceding claims, **characterized in that** the sensor element (50) has at least one Hall sensor and the coupling element (44) has at least one magnet.

9. The power transmission device (10) according to one of the preceding claims, **characterized in that** at least two spring devices (40) are provided, which respectively exert different elastic forces onto the respective coupling element (44).

10. The power transmission device (10) according to one of the preceding claims, **characterized in that** the at least one ramp (46a, 46b) of the at least one spring device (40) has a curved or partially curved course.

11. The power transmission device (10) according to one of the preceding claims, **characterized in that** a housing (70) is arranged such that a sealing at least of the sensor element (50) takes place.

12. The power transmission device (10) according to one of the preceding claims, **characterized in that** the transmission connection (30) for the transmission of the shifting force is configured in the form of a torque.

13. The power transmission device (10) according to one of the preceding claims, **characterized in that** the coupling element (44) has a line contact with the ramp (46a, 46b).

14. The power transmission device (10) according to one of the preceding claims, **characterized in that** the coupling element (44) is mounted rotatably, in order to roll on the ramp (46a, 46b).

## Revendications

1. Dispositif de transmission de force (10) pour une boîte de vitesses (100) avec un système d'assistance de changement de vitesse, comprenant un raccord de levier de vitesse (20) pour la réception d'une force requise pour le passage de vitesse et un raccord de boîte de vitesses (30) pour la transmission de la force requise pour le passage de vitesse à la boîte de vitesses (100) qui peuvent être mis en rotation l'un par rapport à l'autre, **caractérisé en ce que** dans la trajectoire de la force entre le raccord de levier de vitesse (20) et le raccord de boîte de vitesses (30) est disposé au moins un dispositif à ressort (40) avec au moins un élément de ressort (42), au moins une rampe (46a, 46b) et un élément d'accouplement (44) pouvant être mobile le long de la rampe (46a, 46b) lors de la rotation du raccord de levier de vitesse (20) par rapport au raccord de boîte de vitesses (30), pour lequel l'élément de ressort (42) exerce une force de ressort sur l'élément d'accouplement (44) et le pousse contre au moins une rampe (46a, 46b) et pour lequel un élément de détection (50) est prévu qui détecte au moins deux positions différentes de l'élément d'accouplement (44) sur la rampe (46a, 46b).

2. Dispositif de transmission de force (10) selon la revendication 1 **caractérisé en ce que** la force de ressort est exercée perpendiculairement ou pour l'essentiel perpendiculairement à l'axe de rotation du raccord de levier de vitesse (20) et du raccord de boîte de vitesses (30) et l'élément de ressort (42) comporte en particulier des ressorts à disques.

3. Dispositif de transmission de force (10) selon l'une quelconque des revendications précédentes **caractérisé en ce que** le dispositif à ressort (40) comporte au moins deux rampes (46a, 46b) dont l'inclinaison comporte une orientation différente et qui sont disposées sur les deux côtés de l'élément d'accouplement (44).

4. Dispositif de transmission de force (10) selon la revendication 3 **caractérisé en ce que** les deux rampes (46a, 46b) présentent la même ou pour l'essentiel la même inclinaison.

5. Dispositif de transmission de force (10) selon la revendication 3 **caractérisé en ce que** les deux rampes (46a, 46b) présentent des inclinaisons différentes.

6. Dispositif de transmission de force (10) selon l'une quelconque des revendications précédentes **caractérisé en ce qu'au** moins une butée mécanique (60) est prévue qui limite la liberté de rotation relative du raccord de levier de vitesse (20) par rapport au raccord de boîte de vitesses (30) dans au moins un sens de rotation, en particulier dans deux sens de rotation.

7. Dispositif de transmission de force (10) selon l'une quelconque des revendications précédentes **caractérisé en ce que** le dispositif à ressort (40) comporte des moyens de réglage à l'aide desquels la force de ressort qui est appliquée par l'élément de ressort (42) sur l'élément d'accouplement (44), peut être réglée en particulier de l'extérieur.

8. Dispositif de transmission de force (10) selon l'une quelconque des revendications précédentes **caractérisé en ce que** l'élément de détection (50) comporte au moins un capteur à effet Hall et l'élément d'accouplement (44) au moins un aimant.

9. Dispositif de transmission de force (10) selon l'une quelconque des revendications précédentes **caractérisé en ce qu'au** moins deux dispositifs à ressort (40) sont prévus qui exercent respectivement des forces de ressort différentes sur l'élément d'accouplement respectif (44).

10. Dispositif de transmission de force (10) selon l'une quelconque des revendications précédentes **caractérisé en ce qu'au** moins une rampe (46a, 46b) d'au moins un dispositif à ressort (40) présente une allure courbe ou partiellement courbe.

11. Dispositif de transmission de force (10) selon l'une quelconque des revendications précédentes **caractérisé en ce qu'un** boîtier (70) est disposé de telle sorte qu'une étanchéité au moins de l'élément de détection (50) est réalisée.

12. Dispositif de transmission de force (10) selon l'une quelconque des revendications précédentes **caractérisé en ce que** le raccord de boîte de vitesses (30) est constitué pour la transmission de la force requise pour le passage de vitesse sous la forme d'un couple.

13. Dispositif de transmission de force (10) selon l'une quelconque des revendications précédentes **caractérisé en ce que** l'élement d'accouplement (44) présente un contact linéaire avec la rampe (46a, 46b).

14. Dispositif de transmission de force (10) selon l'une quelconque des revendications précédentes **caractérisé en ce que** l'élément d'accouplement (44) est logé de manière à pouvoir tourner pour rouler sur la rampe (46a, 46b).
